## Europäisches Patentamt
## European Patent Office
## Office européen des brevets

(11) Veröffentlichungsnummer: **0 222 741**
**B1**

(12) **EUROPÄISCHE PATENTSCHRIFT**

(45) Veröffentlichungstag der Patentschrift:
20.07.88

(51) Int. Cl.⁴: **G 01 B 5/06,** G 01 B 7/06,
G 01 B 3/00, G 07 D 7/00

(21) Anmeldenummer: **85902030.7**

(22) Anmeldetag: **19.04.85**

(86) Internationale Anmeldenummer:
**PCT/EP 85/00178**

(87) Internationale Veröffentlichungsnummer:
**WO 86/06471 (06.11.86 Gazette 86/24)**

(54) **DICKENMESSVORRICHTUNG FÜR BLATTGUT.**

(43) Veröffentlichungstag der Anmeldung:
**27.05.87 Patentblatt 87/22**

(45) Bekanntmachung des Hinweises auf die Patenterteilung:
**20.07.88 Patentblatt 88/29**

(84) Benannte Vertragsstaaten:
**AT BE CH DE FR GB IT LI LU NL SE**

(56) Entgegenhaltungen:
**AU-B-478 949**
**FR-A-2 318 401**
**GB-A-1 094 863**
**US-A-2 841 876**

(73) Patentinhaber: **GAO GESELLSCHAFT FÜR AUTOMATION UND ORGANISATION MBH,**
**Euckenstrasse 12, D-8000 München 70 (DE)**

(72) Erfinder: **HÄUSLER, August, Trifelsstrasse 2,**
**D-8000 München 90 (DE)**

(74) Vertreter: **Klunker . Schmitt- Nilson . Hirsch,**
**Winzererstrasse 106, D-8000 München 40 (DE)**

## Beschreibung

Vorrichtung für die berührende Messung von Dickenunterschieden an Blattgut, das mit Hilfe eines Transportsystems der Vorrichtung zugeführt wird, mit einem in der Transportebene vorgesehenen Meßsalt, der durch ein in Bezug auf den Meßsalt starr angeordnetes Widerlager und ein bezogen auf den Meßspalt senkrecht zum Blattgut auslenkbares erstes Abtastelement gebildet ist.

Aus der DE-PS-3 133 818 ist eine Dickenmeßvorrichtung für die mechanische Dickenmessung von Spanplatten bekannt. In einem Meßspalt zwischen einem Fühler in Form einer Abtastrolle und einem starren Plattenauflager werden Dickenunterschiede am Meßgut gemessen.

Bei dieser Vorrichtung ist die Abtastrolle mit einer Stange verbunden, die in einer ersten Zylinderkolbenanordnung (Meßzylinder) auf- und niederbewegbar geführt ist. Die Geometrie des Meßzylinders ist so ausgelegt, daß der Kolben gegen ein Luftpolster den Meßhub aufnehmen kann. Eine zweite Zylinderkolbenanordnung (Justierzylinder) ist mechanisch starr mit der ersten gekoppelt, wobei diese die Aufgabe hat, den Nullabgleich der Vorrichtung durchzuführen bzw. das Meßsystem auf die zu erwartende Dicke "d" des Meßgutes einzustellen.

Während der Dickenmessung ist der Druck im Justierzylinder sehr hoch gegenüber dem im Meßzylinder, damit die durch das Meßgut entstehenden Dickenunterschiede im Toleranzbereich d ± Δd unbeeinflußt von Bewegungen des Justierzylinders vom Meßzylinder aufgenommen werden können. Treten im Meßspalt Überdicken auf, die die Toleranzen von ± Δd überschreiten, so wird im Meßzylinder der zulässige Arbeitsbereich überschritten und die durch die Überdicke entstehenden Kräfte auf die nun als starres Widerlager wirkende Zylinderkolbenanordnung übertragen. Da keine Maßnahmen zum Schutz der Dickenmeßvorrichtung gegenüber Überdicken Vorgesehen sind, treten dabei zwangsläufig Beschädigungen bzw. Dejustierungen am Meßsystem auf.

Es ist grundsätzlich denkbar, eine Dickenmeßvorrichtung, die nach dem oben geschilderten Prinzip funktioniert, auch bei automatischen Banknoten-Sortieranlagen einzusetzen.

Bei einer derartigen Anwendung ist die berührende Dickenmessung aber insofern problematische, weil die notwendigen Meßgeschwindigkeiten dort wesentlich höher sind und das Meßgut in wesentlich schnellerer Folge durch die Meßvorrichtung transportiert wird und die zu messenden Dickenunterschiede wesentlich geringer sind. Dabei ist es in der Praxis nicht zu vermeiden, daß auch übereinanderliegende oder gefaltete Blätter und sogar Fremdteile, wie Heftklammern oder dergleichen, die Dickenmeßvorrichtung passieren. Diese Abnormitäten haben zum Teil ein Mehrfaches der "Normdicke". Sie führen leicht zur Bildung von Staus im Transportsystem sowie zu Beschädigungen bzw. Dejustierungen am Meßsystem. Da die Störungen in den meisten Fällen manuell behoben werden müssen wird der Durchsatz der Beleg-Sortiermaschiene unter Umständen stark reduziert.

Der Erfindung liegt daher die Aufgabe zugrunde, eine Vorrichtung für die berührende Messung von Dickenunterschieden an Blattgut vorzuschlagen, die die o.g. Nachteile vermeidet.

Erfindungsgemäß wird die Aufgabe durch die im Hauptanspruch angegebenen Merkmale gelöst.

Der Grundgedanke der Erfindung besteht darin, vor dem eigentlichen Meßspalt ein Vorprüf-Abtastelement vorzusehen, das vorzugsweise zusammen mit dem Widerlager des ersten Abtastelementes zusammen einen Vorprüf-Meßspalt bildet, wobei das Vorprüf-Abtastelement auf Überdicken des antransportierten Meßgutes reagiert und im Bedarfsfall das Meßsystem aus der Transportebene wegschwenkt. Durch das die Überdicke erfassende und selbst gegen mechanische Einwirkung unempfindliche Vorprüf-Abtastelement werden die durch Überdicken entstehenden Kräfte aufgenommen und zum Wegschwenken des Meßsystem genutzt, so daß die Bildung von Staus im Transportsystem sowie Beschädigungen und Dejustierungen des Meßsystems vermieden werden. Ein mit den Abtastelementen zusammenwirkende Widerlager ist vorzugsweise eine Stahlwalze, die gleichzeitig auch Element des Transportsystems ist.

Gemäß einer vorteilhaften Weiterbildung der Erfindung wird das Wegschwenken der Meßvorrichtung erst dann ausgelöst, wenn auf das Vorprüf-Abtastelement eine bestimmte, einstellbare Kraft einwirkt. Dazu ist das Vorprüf-Abtastelement mit einem Auslösemechanismus verbunden, der im zulässigen Arbeitsbereich das Meßsystem starr an die das Widerlager bildende Stahlwalze koppelt. Die Funktion des zweiten Widerlagers wird aufgehoben, wenn die auf das Vorprüf-Abtastelement wirkende Kraft die vorgegebene, am Auslösemechanismus eingestellte Kraft überschreitet. Der Auslösemechanismus ist vorzugsweise derart ausgebildet, daß das Meßsystem automatisch in die ursprüngliche Lage zurückversetzt wird, sobald die die Auslenkung verursachende Überdicke das Meßsystem passiert hat. Damit erübrigen sich manuelle Eingriffe zur Beseitigung von Störfällen.

Weitere Ausführungsformen der Erfindung sind Gegenstand von Unteransprüchen. Weitere Vorteile der Erfindung ergeben sich aus der nachfolgenden Beschreibung eines Ausführungsbeispiels der Erfindung anhand der beigefügten Zeichnung.

Darin zeigen:
Fig. 1 eine Dickenmeßvorrichtung in Meßposition zum Messen von Dickenunterschieden an Blattgut,

Fig. 2 die Schutzposition der Dickenmeßvorrichtung bei Vorliegen von zu dickem Blattgut.

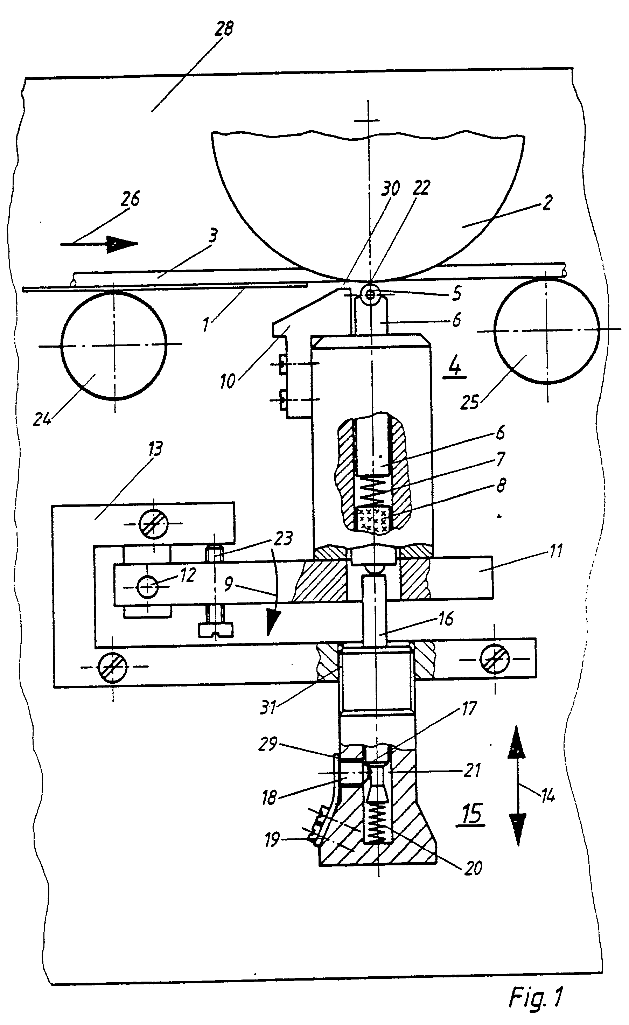

Fig. 1 zeigt in einer beispielhaften Ausführungsform eine Dickenmeßvorrichtung gemäß der Erfindung. Die wesentlichen Elemente der Vorrichtung sind die Meßeinrichtung 4, die Auslöseeinrichtung 15, das Transportsystem 24, 25, 3 mit integriertem Widerlager 2 sowie das Vorprüf-Abtastelement 10.

Die Meßeinrichtung 4 selbst arbeitet prinzipiell so, wie oben im Zusammenhang mit der DE-PS-3 133 818 geschildert. Dickenunterschiede im Meßgut - bei Banknoten beispielsweise im Bereich des Wasserzeichens - bewirken also gegen ein starres Widerlager die mechanische Wegauslenkung eines senkrecht an das Meßgut federnd angelegten Abtastelements. Im Meßsystem wird die Wegänderung direkt oder indirekt in zur Dicke des Meßgutes proportionale elektrische Signale umgesetzt. Wie in Fig. 1 gezeigt, ist die Meßeinrichtung 4 über einen Hebel 11 derart in einem Drehpunkt 12 mit einer Halterung 13 verbunden, daß sie, wie durch den Pfeil 9 angedeutet, um diesen Drehpunkt schwenkbar ist. Die Halterung 13 ist auf einer Grundplatte 28 aufgeschraubt und dient auch zur Aufnahme der Auslöseeinrichtung 15. Die Auslöseeinrichtung ist in der Halterung entsprechend dem in der Fig. 1 gezeigten Pfeil 14 axial verschiebbar und in jeder beliebigen Position in der Halterung 13 fixierbar. Als Widerlager für die Meßeinrichtung 4 ist auf der Grundplatte 28 eine Stahlwalze 2 drehbar gelagert. Die Stahlwalze ist auch Funktionselement des aus Riemen 3 und Transport rollen 24, 25, in der Fig. 1 lediglich schematisch dargestellten Transportsystems. In Transportrichtung - gekennzeichnet durch den Pfeil 26 vor der Meßeinrichtung ist das als Kufe ausgebildete Vorprüf-Abtastelement 10 angeordnet, das mit der Meßeinrichtung 4 und dem Hebel 11 starr verbunden ist, mit der Stahlwalze 2 den Vorprüf-Meßspalt 30 bildet und, wie noch zu erläutern sein wird, über den Hebel 11 mit der Auslöseeinrichtung 15 zusammenwirkt.

Wesentliches Element der Meßeinrichtung ist die Abtast- bzw. Meßrolle 5, die mit einem Stößel 6 verbunden ist. Der Stößel ist in der Meßeinrichtung 4 axial beweglich gelagert und über eine Feder 7 mit einem Element 8 verbunden, das die durch die Stößelbewegung infolge von Dickenänderungen im Meßgut erzeugte und auf die Feder wirkende Kraft aufnimmt und in ein elektrisches Signal umwandelt. Als Umsetzer kann beispielsweise ein Piezokristall-Element (z. B. Quarzkristall-Kraftaufnehmer der Firma Kistler, Typ 9203) verwendet werden. Die Meßrolle 5 der Meßeinrichtung 4 bildet zusammen mit der Stahlwalze 2 des Transportsystems den Meßspalt 22, den das Meßgut, wie in der Fig. 1 gezeigt, in Richtung des Pfeils 26 passiert. Die Einstellung des Meßspaltes zwischen der Walze 2 und der Meßrolle 5 wird durch eine im Hebel II vorgesehene Anschlagschraube 23 vorgenommen, die gegen die Halterung 13 verstellbar ist. Durch Verdrehen der Anschlagschraube 23 wird der Meßspalt so eingestellt, daß selbst die dünnste zu erwartende Stelle des Meßgutes ein gut auswertbares elektrisches Signal am Piezokristall liefert. Mit dem Einstellen des Meßspalts 22 ist in dem gezeigten Ausführungsbeispiel auch der Meßspalt 30 des Vorprüf-Abtastelements 10 eingestellt, da dieses Element starr mit der Meßeinrichtung verbunden ist. Das Element wird an der Meßeinrichtung derart befestigt, daß das Meßgut 1 im vorgesehenen Arbeitsbereich den Vorprüf-Meßspalt 30 praktisch ohne Berührung passieren kann. Mit der Anschlagschraube 23 werden die Meßrolle 5 und das Vorprüf-Abtastelement 10 auf eine bestimmte Position in Richtung auf das Transportsystem gegen die Stahlwalze 2 fixiert. Die Fixierung bezüglich der entgegengesetzten Richtung wird durch die Auslöseeinrichtung 15 vorgenommen.

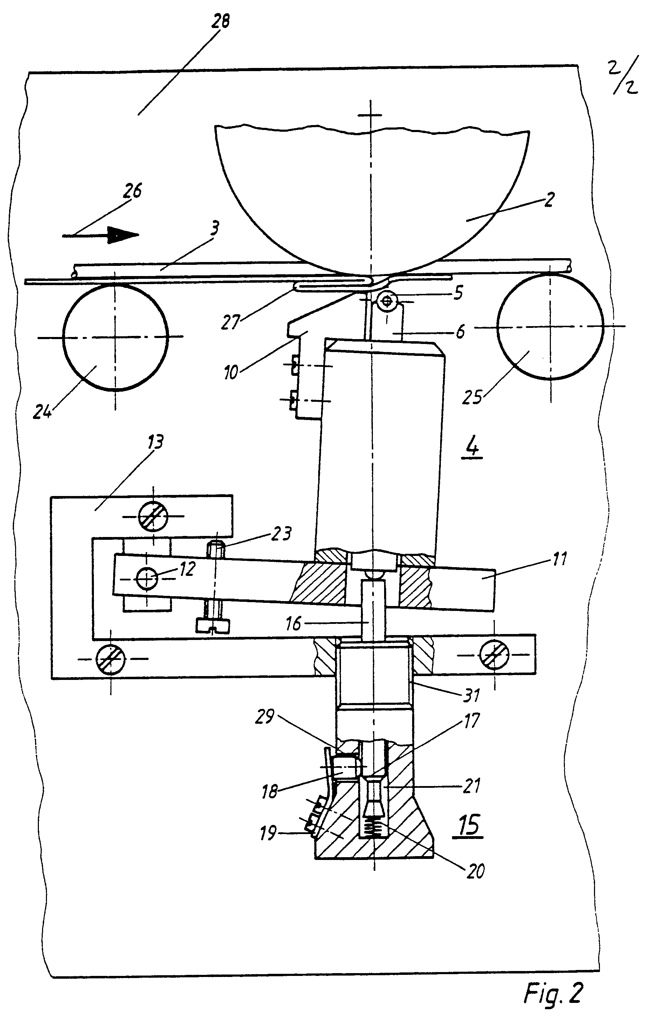

Die Auslöseeinrichtung 15, wie sie in der Fig. 1 und 2 in zwei unterschiedlichen Arbeitsphasen gezeigt ist, besteht im Prinzip aus zwei Stößeln 16, 18, die in je einer Bohrung 21, 29 der Einrichtung 15 beweglich gelagert sind. Während der mit der Meßeinrichtung 4 bzw. mit dem Vorprüf-Abtastelement 10 mechanisch gekoppelte Stößel 16, im folgenden Schubstößel genannt, in einer ersten Bohrung 21 der Einrichtung beweglich geführt ist, gleitet der zweite Stößel 18, im folgenden Sperrstößel genannt, in einer zur ersten senkrecht angeordneten Bohrung 29. Der Schubstößel 16 weist an dem in der Bohrung 21 befindlichen Ende eine Kerbe 17 auf, in die der Sperrstößel 18 eingreift und in der er mit Hilfe einer Feder 19, beispielsweise einer Blattfeder, gehalten wird.

Die Fig. 1 zeigt die Auslösevorrichtung 15 im gesperrten Zustand. Bis zu einem bestimmten, einstellbaren Wert bleibt bei einer auf den Schubstößel 16 wirkenden Kraft die Lage des Sperrstößels in der Bohrung 29 der Einrichtung unverändert. Die Sperr- oder Auslösekraft ist im wesentlichen abhängig vom Flanken-Neigungswinkel der Kerbe 17, der Haftreibung und der Federkraft 19, die auf den Sperrstößel wirkt. Übersteigt die auf den Schubstößel vom Meßgut bewirkte Kraft die Auslösekraft, wird der Sperrstößel 18 in der Bohrung 29 gegen die Kraft der Blattfeder 19 aus der Kerbe 17 herausgedrückt. Nachdem der Sperrstößel 18 aus der Kerbe 17 herausgedrückt wurde, gleitet er auf der Mantelfläche des Schubstößels (siehe dazu Fig. 2). Sobald die auf den Schubstößel wirkende vom Meßgut ausgelöste Kraft verschwindet, wird dieser mit Hilfe einer in der Bohrung 21 angeordneten Feder 20 in die Ausgangsposition, d. h. in die Sperrlage zurückgedrückt. Die Zeit, die vergeht, um den Schubstößel 16 vom gesperrten in den gelösten Zustand zu überführen (Auslösezeit) ist in erster Linie abhängig von dem Weg, den der Sperrstößel 18 auf der Flankenlänge der Kerbe 17 zurücklegt, um aus der Kerbe heraus auf den Schubstößel zu gelangen. Als weitere Parameter gehen die Federkraft der auf den Sperrstößel lastenden Feder 19 sowie Reibungskräfte ein. Die Auslösezeit kann durch geeignete Ausbildung der wirksamen Flankenlänge und der Federkraft den gegebenen Bedingungen angepaßt werden. Schließlich ist die Zeit, die vergeht, um den Schubstößel in die Ausgangsposition zu versetzen, abhängig von der Kraft der Feder 20 und der Reibung aller bei diesem Vorgang zusammenwirkenden Vorrichtungselemente. Wie man erkennt, sind alle Funktionsparameter der Auslöseeinrichtung unabhängig voneinander, auf einfache Weise einstellbar, womit eine optimale Anpassung an die jeweilige Situation möglich ist.

Nachdem der Meßspalt 22 mit Hilfe der Anschlagschraube 23, wie oben beschrieben, auf die zu messende Dicke des Meßgutes eingestellt ist, wird die Auslöseeinrichtung 15 soweit in das entsprechende Gewinde 31 des Rahmens 13 gedreht, bis der Schubstößel 16 die Meßeinrichtung 4 auf der der Meßrolle 5 gegenüberliegenden Seite gerade spielfrei berührt. Damit sind Meßeinrichtung 4 und Vorprüf-Abtastelement 10 durch die Anschlagschraube 23 einerseits und durch die Auslösevorrichtung 15 andererseits quasi starr mit der auf der Grundplatte 23 befestigten Halterung 13 und damit auch mit der Stahlwalze 2 verbunden.

Nach der Erläuterung der einzelnen Funktionselemente soll nachfolgend das Verhalten der Vorrichtung im Meßbetrieb bzw. bei Auftreten eines Störfalls beschrieben werden.

Die durch die Dickenunterschiede des Blattguts 1 entstehenden Hübe der Meßrolle 5 werden durch die Meßeinrichtung in zur Papierdicke proportionale Spannungen umgesetzt (Fig. 1). Die Auslösekraft der Auslöseeinrichtung ist so eingestellt, daß die aufgrund des Meßhubes entstehenden Kräfte nicht ausreichend die Sperrwirkung aufzuheben, so daß die Auslöseeinrichtung im Arbeitsbereich der Meßeinrichtung als starres Widerlager wirkt. Diese starre Kopplung der Meßeinrichtung ermöglicht die Erfassung und Auswertung auch sehr kleiner Hübe, wie sie beispielsweise bei der Prüfung des Wasserzeichens einer Banknote vorkommen. Fig. 2 zeigt die Situation in der ein Störfalle eintritt, wie z. B. beim Antransport einer Banknote mit einer Z-Falte 27. Da diese Z-Falte der Banknote gegenüber dem eingestellten Vorprüf-Meßspalt 30 eine Überdicke darstellt, wirkt auf das Vorprüf-Abtastelement 10 gegen die starre Walze 2 eine Kraft, die über das Gehäuse der Meßeinrichtung 4 auf den Schubstößel 16 zur Auslöseeinrichtung 15 übertragen wird. Die Sperrkraft der Auslöseeinrichtung 15 wird beispielsweise so eingestellt, daß die Sperrwirkung dann aufgehoben wird, wenn auf das Vorprüf-Abtastelement eine Kraft wirkt, die größer ist als die durch eine Überdicke von 50 % des Meßgutes erzeugte. Tritt ein Überschreiten der Sperrkraft ein, wie dies bei einer Z-Falte der Fall ist, so schwenkt die Meßeinrichtung 4 zusammen mit dem Vorprüf-Abtastelement 10 um den Drehpunkt 12 des Hebels 11 aus der Transportebene. In dieser Phase wird die Berührung der Meßrolle 5 mit dem Meßgut 1 vermieden, um Beschädigungen des Meßsystems zu verhindern. Auf die aus der Transportebene weggeschwenkte Anordnung wirkt nun lediglich die durch die Feder 20 erzeugte Kraft, welche nach Freigabe des Meßspaltes 22, 30 die Rückführung der Anordnung in die Ausgangslage ermöglicht. Die Kraft der Feder 20 kann sehr viel kleiner als die zur Überwindung der Überdicke notwendige Sperrkraft gewählt werden. Das bedeutet, daß die Überdicke nach Überwinden der Sperrkraft während des Durchlaufs im Vorprüf-Meßspalt nicht mit hoher Kraft angepreßt wird. Dadurch wird die Gefahr einer Staubildung im Transportweg verringert. Die Auslösezeit der Sperrwirkung, deren Definition oben erläutert wurde, wird sehr kurz gewählt, damit wird die Gefahr Bildung von Staus sowie die Beschädigungen bzw. Dejustierungen des Meßsystems zusätzlich wirkungsvoll verhindert. Die Rückstellzeit der Vorrichtung kann mit der Kraft der Feder 20 derart "träge" eingestellt werden, daß die Meßanordnung zwar erst nach vollständigem Vorbeitransport einer "Überdicke" wieder in ihre Ausgangslage zurückkehrt, daß sie andererseits aber für die Prüfung des nächsten Meßgutes wieder zur Verfügung steht.

Zusammenfassend kann festgestellt werden, daß durch die beispielsweise beschriebene Vorrichtung die sichere und präzise Dickenprüfung auch bei kleinen Hüben gewährleistet ist, daß durch das Ausschwenken der Meßeinrichtung bei Auftreten einer Überdicke aus der Transportebene Staubildung im Transportweg verhindert sowie das Meßsystem vor Beschädigungen bzw. Dejustierungen geschützt ist und nach einem Störfall kein manueller Eingriff zu dessen Behebung notwendig ist, da die ursprüngliche Meßsituation automatisch wiederhergestellt wird.

## Patentansprüche

1. Vorrichtung für die berührende Messung von Dickenunterschiden Blattgut, das mit Hilfe eines Transportsystems (24, 25) der Vorrichtung zugeführt wird mit einem in der Transportebene vorgesehenen Meßspalt (23), der durch ein in Bezug auf den Meßspalt starr angeordnetes Widerlager (2) und ein bezogen auf den Meßspalt senkrecht zum Blattgut auslenkbares erstes Abtastelement (5) gebildet ist, dadurch gekennzeichnet, daß in Transportrichtung (26) vor dem Meßspalt (22) in der Transportebene ein zweites Abtastelement (10) vorgesehen ist, das einen auf eine maximale Dicke des Meßgutes eingestellten zweiten Meßspalt (30) bildet, und daß das erste und das zweite Abtastelement miteinander so gekoppelt sind, daß bei Vorliegen von zu dickem Meßgut zumindest das erste Abtastelement (5) aus der Transportebene wegbewegt wird.

2. Vorrichtung nach Anspruch 1, dadurch gekennzeichnet, daß das erste und das zweite Abtastelement mechanisch miteinander gekoppelt sind.

3. Vorrichtung nach Anspruch 2, dadurch gekennzeichnet, daß beide Abtastelemente (5, 10) nach Vorliegen von zu dickem Meßgut aus der Transportebenewegbewegbar sind.

4. Vorrichtung nach Anspruch 3, dadurch gekennzeichnet, daß die Abtastelemente (5, 10) durch das Meßgut aus der Transportebene wegbewegbar sind.

5. Vorrichtung nach Anspruch 4, dadurch gekennzeichnet, daß die Abtastelemente über einen Hebel (11) um einen Drehpunkt (12) wegschwenkbar sind.

6. Vorrichtung nach Anspruch 5, dadurch gekennzeichnet, daß das zweite Abtastelement (10) mit einer Auslöseeinrichtung (15) gekoppelt ist, die bei Überschreiten einer vorgebbaren im zweiten Meßspalt (30) auftretenden Kraft auslöst und damit das Wegbewegen der Abtastelemente (10, 5) aus der Transportebene ermöglicht

7. Vorrichtung nach Anspruch 6, dadurch gekennzeichnet, daß die Auslöseeinrichtung (15) nach Überschreiten der Auslösekraft die Abtastelemente (10, 5) in Richtung Meßspalt (22, 30) drückt.

8. Vorrichtung nach Anspruch 6 und 7, dadurch gekennzeichnet, daß die Auslöseeinrichtung (15) aus einem Schubstößel (16) mit einer Kerbe (17) und einem Sperrstößel (18) besteht, die in senkrecht Zueinander stehenden Bohrungen (21, 29) der Auslöseeinrichtung gleiten, wobei der Sperrstößel (18) durch eine erste Feder (19) auf den Schubstößel (16) gedrückt wird.

9. Vorichtung nach Anspruch 8, dadurch gekennzeichnet, daß bei der Auslöseeinrichtung (15) im gesperrten Zustand der Sperrstößel (18) in der Kerbe (17) des Schubstößels (16) lagert.

10. Vorrichtung nach Anspruch 9, dadurch gekennzeichnet, daß bei der Auslöseeinrichtung (15) nach Überschreiten der Sperrkraft der Sperrstößel (18) aus der Kerbe (17) des Schubstößels (16) gleitet.

11. Vorrichtung nach Anspruch 10, dadurch gekennzeichnet, daß bei der Auslöseeinrichtung (15) nach Überschreiten der Sperrkraft der Schubstößel (16) gegen die Kraft einer zweiten Feder (20) ausgelenkt wird, die den Schubstößel (16) in Richtung der Ausgangslage zurückdrückt.

12. Vorrichtung nach Anspruch 8 und 9, dadurch gekennzeichnet, daß die Auslösekraft der Auslöseeinrichtung (15) durch den Neigungswinkel der Kerbe (17), die Federkraft der ersten Feder (19) und die Reibung der zusammenwirkenden Vorrichtungselemente (12, 16, 17, 18, 21, 29) bestimmt wird.

13. Vorrichtung nach Anspruch 8 bis 12, dadurch gekennzichnet, daß die Auslösezeit der Auslöseeinrichtung (15) vom gesperrten in den gelösten Zustand durch den Weg, den der Sperrstößel (18) auf der Flankenlänge der Kerbe (17) zurücklegt, abhängig ist.

14. Vorrichtung nach Anspruch 11, dadurch gekennzeichnet, daß die Rückstellzeit der Abtastelemente (10, 5) durch die Federkraft der zweiten Feder (20) eingestellt ist.

15. Vorrichtung nach Anspruchs 11 und 14, dadurch gekennzeichnet, daß Sperrkraft und Rückstellkraft unterschiedlich eingestellt sind.

16. Vorrichtung nach Anspruch 15, dadurch gekennzeichnet, daß die Rückstellkraft kleiner als die Sperrkraft eingestellt ist.

**Claims**

1. Device for the contact measurement of thickness differences on sheet goods which are fed past the device with the aid of a transport system (24, 25) with a measuring gap (22) provided in the transport plane which is formed by a counter-bearing (2) arranged rigidly with respect to the measuring gap and a first sensing element (5) displaceable with reference to the measuring gap perpendicular to the sheet goods, characterised in that in front of the measuring gap (22) in the transport direction (26), a second sensing element (10) is provided in the transport plane which constitutes a second measuring gap (30) adjusted to a maximum thickness of the goods to be measured and that the first and the second sensing elements are so coupled one to another that on the presence of too thick goods to be measured at least the first sensing element (5) is moved away out of the transport plane.

2. Device according to claim 1 characterised in that the first and the second sensing elements are mechanically coupled with one another.

3. Device according to claim 2 characterised in that both sensing elements (5, 10) are moveable away out from the transport plane on the presence of too thick goods to be measured.

4. Device according to claim 3 characterised in that the sensing elements (5, 10) are moveable away out of the transport plane by the goods to be measured.

5. Device according to claim 4 characterised in that the sensor element is swingable away via a lever (11) about a turning point (12).

6. Device according to claim 5 characterised in that the second sensing element (10) is coupled to a release device (15) which on exceeding a predetermined force arising in the second measuring gap (30) releases and thereby makes possible the moving away of the sensor elements (10, 5) from the transport plane.

7. Device according to claim 6 characterised in that the release unit (15) after exceeding the release force presses the sensing elements (10, 5) in the direction of the measuring gap (22, 30).

8. Device according to claim 6 and 7 characterised in that the release unit (15) consists of a push rod (16) with a notch (17) and a locking pin (18) which slide in mutually perpendicular bores (21, 29) of the release unit wherein the locking pin (18) is pressed by a first spring (19) on the pushrod (16).

9. Device according to claim 8 characterised in that in the release unit (15) in the locked condition the locking pin (18) rests in the notch (17) of the push rod (16).

10. Device according to claim 9 characterised in that in the release unit (15) after exceeding the locking force the locking pin (18) slides out of the notch (17) of the push rod (16).

11. Device according to claim 10 characterised in that in the release device (15) after exceeding the locking force the push rod (16) is subjected to the force of a second spring (20) which pushes back the push rod (16) in the direction of the starting position.

12. Device according to claim 8 and 9 characterised in that the release force of the release unit (15) is determined by the angle of inclination of the notch (17), the spring force of the first spring (19) and the friction of the cooperating device elements (12, 16, 17, 18, 21, 29).

13. Device according to claims 8 to 12 characterised in that the release time of the release unit (15) from the locked into the released condition is dependent on the path which the locking pin (18) travels against the flank length of the notch (17).

14. Device according to claim 11 characterised in that the return position time of the sensing element (10, 5) is adjusted by the spring force of the second spring (20).

15. Device according to claim 11 and 14 characterised in that locking force and return force are adjusted differently.

16. Device according to claim 15 characterised in that the return force is adjusted smaller than the locking force.

**Revendications**

1. Dispositif pour mesurer par contact les différences d'épaisseur d'un produit en feuilles qui est transporté à l'aide d'un système de transport (24, 25) dudit dispositif, comportant une fente de mesure (22) prévue dans le plan de transport et définie par une pièce de contre-appui (2) disposée de façon fixe par rapport à la fente de mesure et par un premier élément palpeur susceptible d'être déplacé perpendiculairement au produit en feuilles, en référence à la fente de mesure, caractérisé par le fait que dans le sens de transport (26), il est prévu dans le plan de transport, un deuxième élément palpeur (10) avant la fente de mesure (22), lequel deuxième élément palpeur définit une deuxième fente de mesure (30) réglée à l'épaisseur maximale du produit à mesurer et en ce que le premier élément palpeur et le deuxième élément palpeur sont couplés de telle façon qu'en cas d'apparition d'un produit à mesurer trop épais, au moins le premier élément palpeur (5) soit déplacé hors du plan de transport.

2. Dispositif selon la revendication 1, caractérisé par le fait que le premier élément palpeur et le deuxième élément palpeur sont couplés mécaniquement.

3. Dispositif selon la revendication 2, caractérisé par le fait que les deux éléments palpeurs (5, 10) sont déplaçables hors du plan de transport en cas d'apparition d'un produit à mesurer trop épais.

4. Dispositif selon la revendication 3, caractérisé par le fait que les éléments palpeurs (5, 10) sont déplaçables hors du plan de transport par le produit à mesurer.

5. Dispositif selon la revendication 5, caractérisé par le fait que les éléments palpeurs sont susceptibles d'être écartés par pivotement autour d'un centre de rotation (12) par l'intermédiaire d'un levier (11).

6. Dispositif selon la revendication 5, caractérisé par le fait que le second élément palpeur (10) est couplé avec un dispositif de déclenchement (15) qui se déclenche dans le cas où un dépassement d'une force prédéterminée agit dans la seconde fente de mesure (30) et qui permet ainsi le pivotement des éléments palpeurs (10, 5) hors du plan de transport.

7. Dispositif selon la revendication 6, caractérisé par le fait que le dispositif de déclenchement (15) pousse les éléments palpeurs (10, 5) en direction de la fente de mesure (22, 30) après le dépassement de la force de déclenchement.

8. Dispositif selon la revendication 6 où 7, caractérisé par le fait que le dispositif de déclenchement (15) est constitué par un coulisseau de poussée (16) comportant une encoche (17) et par un coulisseau de blocage (18) qui coulissent dans des alésages (21, 29) du dispositif de déclenchement qui sont perpendiculaires l'un par rapport à l'autre, le coulisseau de blocage (18) étant poussé par un premier ressort (19) contre le coulisseau de pousse (16).

9. Dispositif selon la revendication 8, caractérisé par le fait que, dans le dispositif de déclenchement (15) à l'état verrouillé, le coulisseau de blocage (18) repose dans l'encoche (17) du coulisseau de poussée.

10. Dispositif selon la revendication 9, caractérisé par le fait que dans le dispositif de déclenchement (15), après le dépassement de la force de blocage, le coulisseau de blocage (18) glisse hors de l'encoche (17) du coulisseau de poussée (16).

11. Dispositif selon la revendication 10, caractérisé par le fait que dans le dispositif de déclenchement (15), après le dépassement de la force de blocage, le coulisseau de poussée (16) est soumis à la force d'un deuxième ressort (20) qui déplace le coulisseau de poussée vers sa position initiale.

12. Dispositif selon les revendications 8 et 9, caractérisé par le fait que la force de déclenchement du dispositif de déclenchement (15) est déterminée par l'angle d'inclinaison de l'encoche (17), par la force élastique du premier ressort (19) et par le frottement des éléments du dispositif (12, 16, 17, 18, 21, 29) associés.

13. Dispositif selon les revendications 8 à 12, caractérisé par le fait que le temps de déclenchement du dispositif de déclenchement (15), entre l'état bloqué et l'état libéré est fonction du chemin parcouru par le coulisseau de blocage (18) sur la longueur de flanc de l'encoche (17).

14. Dispositif selon la revendication 11, caractérisé par le fait que le temps de rappel des éléments palpeurs (10, 5), est réglé par la force élastique du deuxième ressort (20)

15. Dispositif selon les revendications 11 et 14, caractérisé par le fait que la force de blocage et la force de rappel sont réglées de façon différente.

16. Dispositif selon la revendication 15, caractérisé par le fait que la force de rappel est réglée à une valeur plus faible que la force de blocage.

Fig. 1

Fig. 2